# EUROPEAN PATENT APPLICATION

(11) **EP 3 640 730 A1**
(43) Date of publication of application: **22.04.2020**
(21) Application number: 19202015.4
(22) Date of filing: 08.10.2019
(51) Int. Cl.: G03B 17/55, B60R 11/04, G03B 17/08

(54) **CAMERA MODULE FOR VEHICLE**

(30) Priority: 16.10.2018 KR 20180123125
(71) Applicant: Top Central R&D Center, Gyeonggi-do 13486 (KR)
(72) Inventor: GU, Mean Seok, 12785 Gyeonggi-do (KR); LEE, Hee-Joong, 10474 Geyonggi-do (KR); LEE, Seong Kwon, 12739 Gyeonggi-do (KR); SONG, Huiwon, 13498 Gyeonggi-do (KR); JO, Hwan Gyun, 16014 Gyeonggi-do (KR); PARK, Seung Hyun, 13126 Gyeonggi-do (KR)
(74) Representative: AWA Sweden AB

(57) **Abstract**

The present invention relates to a camera module for a vehicle, including: upper and lower housings having therein an accommodation space; a lens holder accommodated in an internal space of the upper housing and having a protruding first opening part; a lens barrel inserted into an upper portion of the first opening part; a heat generating member interposed between the lens holder and the lens barrel and having a second opening part having an inner diameter larger than an outer diameter of the first opening part; and a lower board accommodated in an internal space of the lower housing and mounted with an image sensor at a position corresponding to the lens barrel.

## Description

### BACKGROUND OF THE INVENTION

### Field of the Invention

The present invention relates to a camera module, in which a heat generating member is applied to a lens applied to a camera module to remove moisture and frost produced in the camera module due to a temperature difference or remove water droplets and ice formed on a surface of the lens when it rains or snows.

### Description of the Related Art

In general, the situation at the rear of a vehicle as well as the situation in front of the vehicle is considered as a very important factor when driving the vehicle. In particular, in order to prevent a risk of an accident when changing lanes or moving the vehicle rearward, it is necessary to assuredly recognize rear, rear left, and rear right situations and then change the lanes or move the vehicle rearward.

When moving the vehicle rearward or changing the lanes while the vehicle travels on the lane, a driver recognizes the situations at the rear side or the two opposite rear sides by using two side mirrors protruding at two opposite sides of a vehicle body or a rear view mirror mounted in the interior of the vehicle, and then the driver changes the lanes or moves the vehicle rearward when the driver determines that the vehicle is followed by another vehicle at an appropriate distance in a safe state or there is no obstacle at the rear of the vehicle.

However, when the driver is a beginner, the driver is inexperienced in recognizing the situation at the rear of the vehicle by using the side mirrors and the rear view mirror while driving the vehicle, so that an accident such as a rear-end collision may occur and it is very difficult for the driver to assuredly recognize an obstacle at the rear of the vehicle.

To this end, recently, a camera module is generally mounted at a front or rear side of the vehicle, and the camera module captures images of traffic information and objects at the front and rear of the vehicle and outputs the images through a display device provided in the interior of the vehicle to monitor blind spots at the front and rear sides of the vehicle, particularly, at the rear side of the vehicle, thereby assisting in safely driving the vehicle.

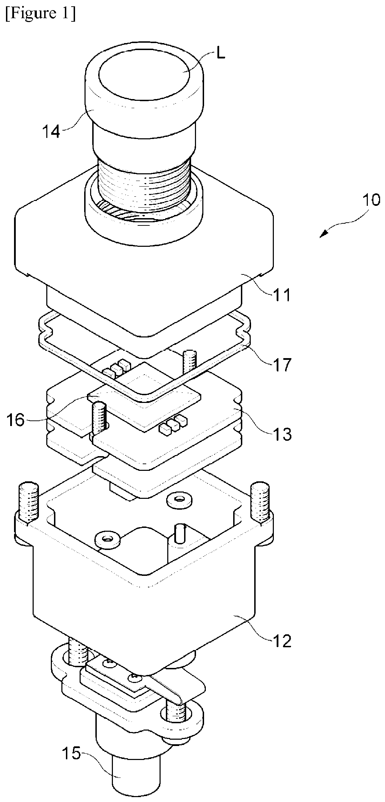

FIG. 1 is an assembled perspective view of a camera module for a vehicle in the related art.

Referring to FIG. 1, a camera module 10 for a vehicle in the related art includes upper and lower housings 11 and 12, a board 13 mounted in a space inside the upper and lower housings 11 and 12, a lens barrel 14 coupled at an upper side of the upper housing 11, and a connector 15 coupled at a lower side of the lower housing 12.

The board 13 mounted with an image sensor 16 is positioned inside the upper and lower housings 11 and 12, and the upper and lower housings 11 and 12 are sealed with a rubber member 17.

In addition, the connector 15 configured to supply electric power to the board 13 and transmit signals to external devices is coupled at the lower side of the lower housing 12.

Meanwhile, the lens barrel 14, in which multiple cover lenses 145 are stacked, is mounted at the upper side of the upper housing 11, and the upper housing 11 and the lens barrel 14 are closely coupled by means of a separate fastening means or a bonding agent applied to a coupled portion therebetween.

In this case, when a coupled state between the upper housing 11 and the lens barrel 14 or a coupled state between the multiple cover lenses 145 in the lens barrel 14 is defective or a temperature difference in the external environment of the camera module changes suddenly, moisture and frost are frequently introduced into the camera module, particularly, the lens barrel 14. The introduction of the moisture and frost into the lens barrel 14 causes a problem that the image captured by the camera module is not clear. In addition, when it rains or snows, water droplets and ice may be formed on a surface of the lens and may make it difficult to ensure visibility.

### BRIEF SUMMARY OF THE INVENTION

The present invention has been made in an effort to solve the above-mentioned problems, and an object of the present invention is to provide a camera module, in which a heat generating member is applied to a lens barrel applied to a camera module to remove moisture and frost produced in the camera module due to a temperature difference or remove water droplets and ice formed on a surface of a lens when it rains or snows.

In order to achieve the above-mentioned object, one aspect of the present invention provides a camera module for a vehicle, including: upper and lower housings having therein an accommodation space; a lens holder accommodated in an internal space of the upper housing and having a protruding first opening part; a lens barrel inserted into an upper portion of the first opening part; a heat generating member interposed between the lens holder and the lens barrel and having a second opening part having an inner diameter larger than an outer diameter of the first opening part; and a lower board accommodated in an internal space of the lower housing and mounted with an image sensor at a position corresponding to the lens barrel.

Here, the heat generating member may be coupled to an upper portion of the lens holder so as to surround the outer diameter of the first opening part, such that it is possible to remove moisture and frost produced in the camera module, particularly, in a lens module by means of heat transferred from the heat generating member.

In addition, another aspect of the present invention provides a camera module for a vehicle, including: upper and lower housings having therein an accommodation space; a lens barrel coupled to a first opening part formed on an upper portion of the upper housing; a heat generating member interposed between the first opening part and the lens barrel and having a second opening part having an outer diameter smaller than an inner diameter of the first opening part; and a lower board accommodated in an internal space of the lower housing and mounted with an image sensor at a position corresponding to the lens barrel.

Here, the heat generating member may be coupled to a lower end of the lens barrel so as to surround an outer diameter of a lower end of the lens barrel, and the lens barrel may penetrate the second opening part of the heat generating member and may be inserted into the first opening part, such that it is possible to remove moisture and frost produced in the camera module, particularly, in the lens module by means of heat transferred from the heat generating member.

According to the present invention, the heat generating member disposed to be in contact with the lens module generates resistive heat as electric power is applied to the heat generating member, such that it is possible to effectively remove moisture and frost in the lens barrel as well as the accommodation space formed inside the upper and lower housings by means of thermal energy generated by the heat generating member.

In addition, according to the present invention, the heat generating member has a heat dissipation structure formed in a direction that is not directed toward the lens barrel, and as a result, it is possible to prevent a board, an image sensor, or the like in the camera module from being damaged by heat emitted from the heat generating member.

### BRIEF DESCRIPTION OF THE DRAWINGS

FIG. 1 is an assembled perspective view of a camera module for a vehicle in the related art.
FIG. 2 is a cross-sectional view of a camera module for a vehicle according to an exemplary embodiment of the present invention.
FIG. 3 is a perspective view illustrating coupling relationships between a lens barrel, a lens holder, and a heat generating member in the camera module illustrated in FIG. 2.
FIG. 4 is a cross-sectional view of a camera module for a vehicle according to another exemplary embodiment of the present invention.
FIG. 5 is a perspective view illustrating coupling relationships between a lens barrel, a lens holder, and a heat generating member in the camera module illustrated in FIG. 4.
FIG. 6 is a top plan view of the heat generating member according to the exemplary embodiment of the present invention.
FIG. 7 is a view illustrating positions of electrode parts formed on the heat generating member illustrated in FIG. 6.
FIG. 8 is a view illustrating positions of resistor parts formed on the heat generating member illustrated in FIG. 6.
FIG. 9 is a view illustrating positions of radial coating layers formed on the heat generating member illustrated in FIG. 6.
FIG. 10 is a cross-sectional view of the heat generating member taken along cutting line A-A' in FIG. 6.
FIGS. 11 to 13 are cross-sectional views of heat generating members according to various exemplary embodiments of the present invention.

### DETAILED DESCRIPTION OF THE INVENTION

Specific terms are defined herein for convenience in order to help easily understand the present invention. Unless otherwise defined herein, all technical and scientific terms used in the present invention will have the meanings that are generally understood by those skilled in the art.

In addition, singular expressions may include plural expressions thereof, and plural expressions may also include singular expressions thereof unless the context clearly dictates otherwise.

Hereinafter, a camera module for a vehicle according to an exemplary embodiment of the present invention will be described in detail with reference to the drawings attached to the present application.

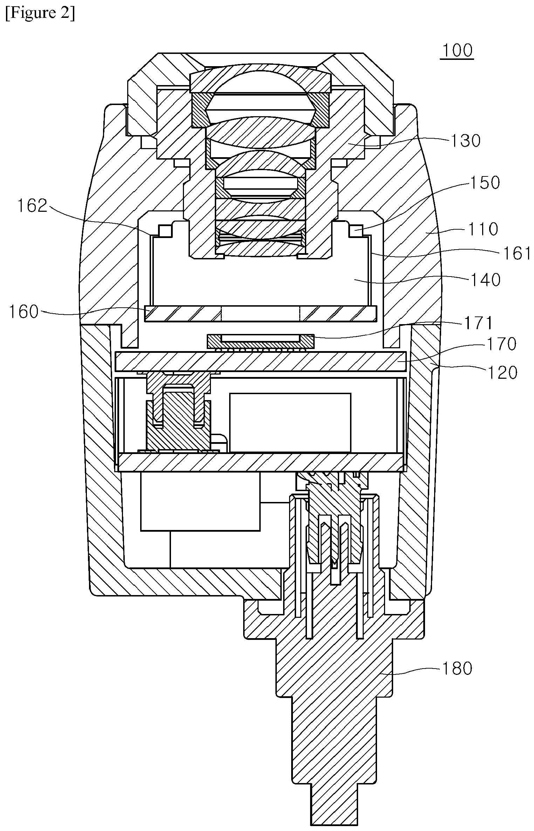

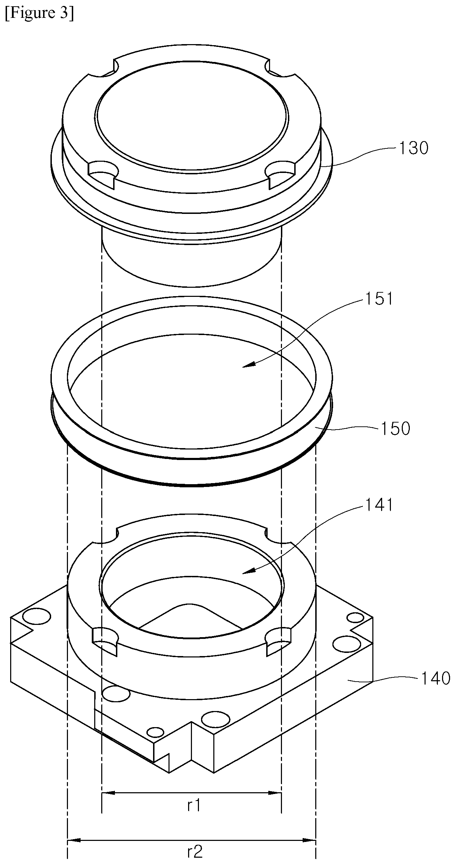

FIG. 2 is a cross-sectional view of a camera module for a vehicle according to an exemplary embodiment of the present invention, and FIG. 3 is a perspective view illustrating coupling relationships between a lens barrel, a lens holder, and a heat generating member in the camera module illustrated in FIG. 2.

Referring to FIGS. 2 and 3, a camera module 100 for a vehicle according to the exemplary embodiment of the present invention includes upper and lower housings 110 and 120 coupled to each other to form an accommodation space therein and define an external appearance of the camera module 100. In general, the upper and lower housings 110 and 120 are made of plastic but may be made of various materials such as metal (e.g., aluminum) as necessary.

An upper board 160 is accommodated in an internal space of the upper housing 110, and a lens holder 140 having a protruding first opening part 141 is positioned on the upper board 160.

Here, the lens holder 140 may be made of plastic or metal (e.g., aluminum), and particularly, the lens holder 140 may be made of metal so that the lens holder 140 may serve as a medium for transferring heat generated by a heat generating member 150 to be described below.

The first opening part 141 protrudes from the upper portion of the lens holder 140, and a lens barrel 130 is inserted into the lens holder 140 through the first opening part 141. The lens barrel 130 has a structure in which multiple lenses are stacked in multiple stages in a lens casing. In general, the lens may be made of glass or plastic, and the lens casing may be made of plastic or metal (e.g., aluminum).

The first opening part 141 is penetratively formed in an up-down direction of the lens holder 140, such that an image may be formed on an image sensor 171 to be described below through the lens barrel 130 inserted into the first opening part 141.

In this case, the lens barrel 130 is not entirely inserted into the first opening part 141 of the lens holder 140, but a lower end of the lens barrel 130 is inserted into the first opening part 141, such that the lens barrel 130 may be held by the lens holder 140. To this end, an outer diameter of the lower end of the lens barrel 130 may be equal to an inner diameter r1 of the first opening part 141 of the lens holder 140 or may be smaller than the inner diameter r1 of the first opening part 141.

A lower board 170 is accommodated in an internal space of the lower housing 120 positioned at the lower side of the upper housing 110, and the image sensor 171 is mounted, on the lower board 170, at a position corresponding to an optical axis of the lens barrel 130 inserted into the first opening part 141 of the lens holder 140.

A connector 180 is coupled to the lower portion of the lower housing 120, and the connector 180 is a connecting part for electrically connecting the camera module 100 to external devices such as a power supply unit.

In addition, the upper portion of the upper housing 110 has an opening part through which the lens barrel 130 is exposed, and a cover lens for protecting the lens barrel 130 may be coupled to an upper portion of the opening part.

According to the present exemplary embodiment, the heat generating member 150 is interposed between the lens holder 140 and the lens barrel 130 and autonomously generates heat when electric power is applied to the heat generating member 150, thereby removing moisture and frost produced in the camera module due to a temperature difference.

The heat generating member 150 may be electrically connected to the upper board 160 to generate heat by being supplied with electric power. To this end, one or more wiring lines 161 and 162 may be provided to electrically connect the heat generating member 150 and the upper board 160. In this case, an electrode connected to the wiring lines 161 and 162 may be disposed on the upper board 160.

In addition, as another example, in a case in which the upper board 160 is in close contact with an inner circumferential surface of the upper housing 110, the wiring lines 161 and 162 may be attached to an inner surface of the upper housing 110 or inserted into the inner surface of the upper housing 110, such that the wiring lines 161 and 162 may be provided in various forms without affecting the images captured by the image sensor 171 through the lens barrel 130.

The heat generating member 150 may be coupled to the upper portion of the lens holder 140 so as to surround the outer diameter of the first opening part 141 of the lens holder 140. To this end, the heat generating member 150 includes a second opening part 151 having an inner diameter equal to an outer diameter r2 of the first opening part 141 or larger than the outer diameter r2 of the first opening part 141.

Since the lower end of the lens barrel 130 is inserted into the first opening part 141 of the lens holder 140 as described above, the first opening part 141 of the lens holder 140 may be at least made of metal so that the heat generated by the heat generating member 150 coupled to surround the outer diameter of the first opening part 141 of the lens holder 140 is transferred to the lens barrel 130.

In the case in which the heat generating member 150 is not in direct contact with the lens barrel 130 and the lens holder 140 is used as a medium for transferring heat as described above, it is possible to prevent the lens barrel 130 from being damaged by excessive heat emitted from the heat generating member 150. In particular, this structure may be more effective in the case in which the lens barrel 130 is made of a material vulnerable to heat.

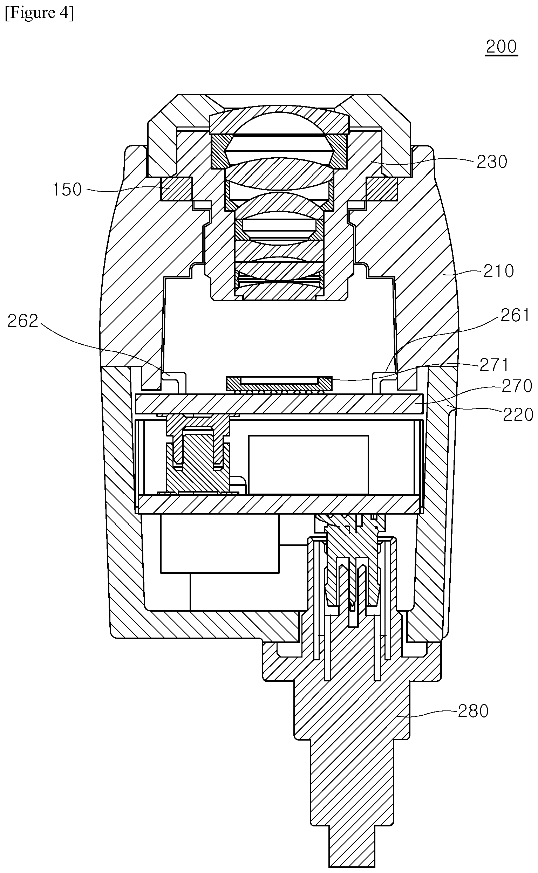

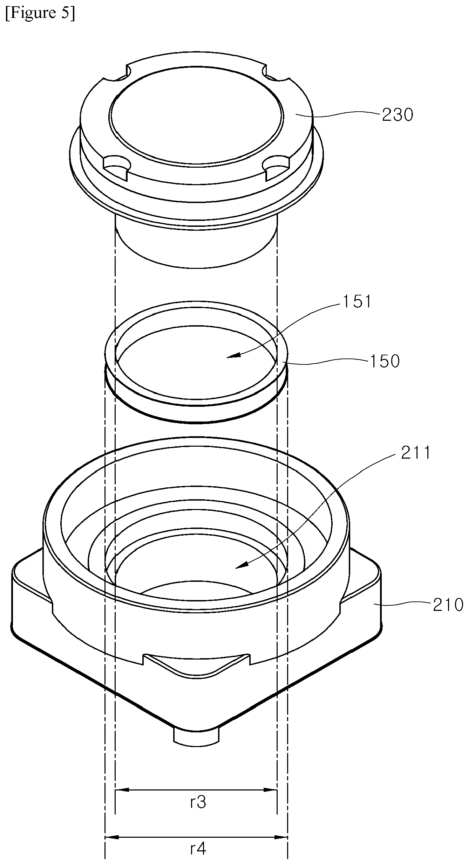

FIG. 4 is a cross-sectional view of a camera module for a vehicle according to another exemplary embodiment of the present invention, and FIG. 5 is a perspective view illustrating coupling relationships between a lens barrel, a lens holder, and a heat generating member in the camera module illustrated in FIG. 4.

Referring to FIGS. 4 and 5, a camera module 200 for a vehicle according to another exemplary embodiment of the present invention includes upper and lower housings 210 and 220 coupled to each other to form an accommodation space therein and define an external appearance of the camera module 200. In general, the upper and lower housings 210 and 220 are made of plastic but may be made of various materials such as metal (e.g., aluminum) as necessary. In the present exemplary embodiment, the upper housing 210 may be at least made of metal (e.g., aluminum) so that the heat generated by the heat generating member 150 to be described below is effectively transferred to the lens barrel 230.

A first opening part 211 is formed on the upper portion of the upper housing 210, and a lens barrel 230 is inserted into the upper housing 210 through the first opening part 211. The lens barrel 230 has a structure in which multiple lenses are stacked in multiple stages in a lens casing. In general, the lens may be made of glass or plastic, and the lens casing may be made of plastic or metal (e.g., aluminum).

The first opening part 211 is penetratively formed in an up-down direction of the upper housing 210 and penetratively formed at least to the accommodation space in the upper housing 210, such that an image may be formed on an image sensor 271 to be described below through the lens barrel 230 inserted into the first opening part 211.

In this case, the lens barrel 230 is entirely inserted into the first opening part 211 of the upper housing 210 and thus may be fixed to the upper housing 210. To this end, an inner diameter r3 of the first opening part 141 of the upper housing 210 may be equal to an outer diameter of the lower end of the lens barrel 130 or larger than the outer diameter of the lower end of the lens barrel 130. If the lens barrel 230 has a structure in which a width thereof is increased upward, the first opening part 141 of the upper housing 210 may also have a structure in which a width thereof is increased upward.

A lower board 270 is accommodated in an internal space of the lower housing 220 positioned at the lower side of the upper housing 210, and the image sensor 271 is mounted, on the lower board 270, at a position corresponding to an optical axis of the lens barrel 230 inserted into the first opening part 211 of the upper housing 210.

A connector 280 is coupled to the lower portion of the lower housing 220, and the connector 280 is a connecting part for electrically connecting the camera module 200 to external devices such as a power supply unit.

In addition, a cover lens for protecting the lens barrel 230 inserted into the first opening part 211 may be coupled to the upper portion of the first opening part 211 of the upper housing 210.

According to the present exemplary embodiment, the heat generating member 150 is interposed between the first opening part 211 of the upper housing 210 and the lens barrel 230 and autonomously generates heat when electric power is applied to the heat generating member 150, thereby removing moisture and frost produced in the camera module due to a temperature difference or removing water droplets and ice formed on the surface of the lens when it rains or snows.

In addition, the heat generating member 150 may be electrically connected to the lower board 270 to generate heat by being supplied with electric power. To this end, one or more wiring lines 261 and 262 may be provided to electrically connect the heat generating member 150 and the lower board 270. In this case, an electrode connected to the wiring lines 261 and 262 may be disposed on the lower board 270.

In addition, as another example, the wiring lines 261 and 262 may be attached to an inner surface of the upper housing 210 or inserted into the inner surface of the upper housing 210, such that the wiring lines 261 and 262 may be provided in various forms without affecting the images captured by the image sensor 271 through the lens barrel 230.

The heat generating member 150 may be coupled to the lower end of the lens barrel 230 so as to surround the outer diameter of the lower end of the lens barrel 230. To this end, the heat generating member 150 includes a second opening part 151 having an inner diameter equal to the outer diameter of the lower end of the lens barrel 230 or larger than the outer diameter of the lower end of the lens barrel 230.

In addition, the lens barrel 230 may penetrate the second opening part 151 of the heat generating member 150 and then be inserted into the first opening part 211 of the upper housing 210.

As another example, the upper portion of the first opening part 211 has a stepped portion, and the stepped portion may have an inner diameter r4 corresponding to the outer diameter of the heat generating member 150. Therefore, the heat generating member 150 may be stably supported between the upper housing 210 and the lens barrel 230.

Since the heat generating member 150 is interposed between the first opening part 211 of the upper housing 210 and the lens barrel 230 as described above, the possibility of damaging the lower board 270, the image sensor 271, or the like positioned at the lower side of the upper housing 210 may be reduced.

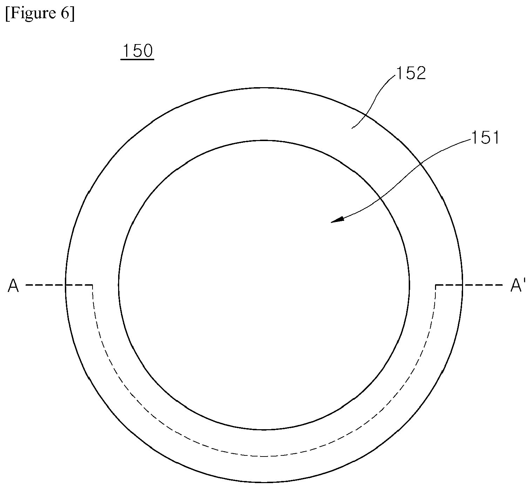

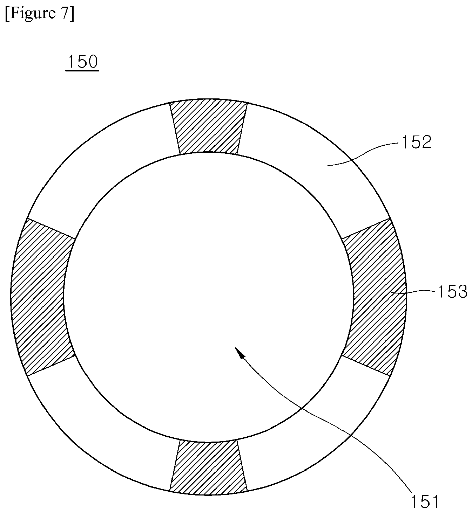

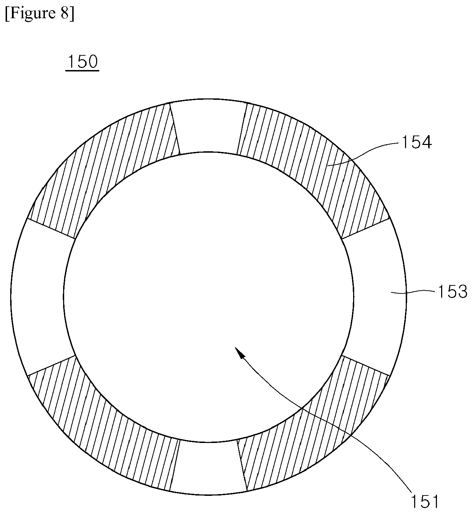

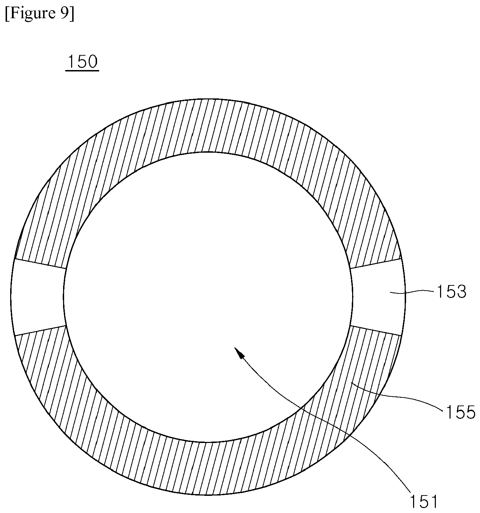

FIG. 6 is a top plan view of the heat generating member according to the exemplary embodiment of the present invention, FIG. 7 is a view illustrating positions of electrode parts formed on the heat generating member illustrated in FIG. 6, FIG. 8 is a view illustrating positions of resistor parts formed on the heat generating member illustrated in FIG. 6, and FIG. 9 is a view illustrating positions of radial coating layers formed on the heat generating member illustrated in FIG. 6.

Referring to FIG. 6, the heat generating member 150 is a doughnut-shaped member having therein the O-shaped first opening part 151, and for example, the shape of the first opening part 151 may be variously formed in accordance with the shapes of the lens barrels 130 and 230, the shape of the first opening part 141 of the lens holder 140, the shape of the first opening part 211 of the upper housing 210, and the like.

FIGS. 7 to 9 are views illustrating a heat generating structure of the heat generating member 150, and for convenience, the heat generating structure will be described on the premise that the heat generating member 150 is viewed in a plan view. If necessary, the heat generating structure in a state in which the heat generating member 150 is applied to the camera module will be described.

Referring to FIG. 7, the heat generating member 150 includes electrode parts 153 formed in a predetermined pattern on a ceramic board 152. In this case, the heat generating member 150 is installed in the camera module such that the electrode parts 153 are directed downward so that the electrode parts 153 are connected to the wiring lines 161 and 162 illustrated in FIG. 2 or the wiring lines 261 and 262 illustrated in FIG. 4.

Here, the ceramic board 152 may be a board made of a material which is excellent in heat resistance and mechanical strength and has high insulation resistance. For example, a ceramic board made of alumina (Al₂O₃), aluminum nitride (A1N), zirconia (Zr02), silicon carbide (SiC), or silicon nitride (Si₃N₄) may be used. The electrode part 153 may be made of, but not necessarily limited to, metal such as Ag, Ni/Ag, NiZn/Ag, or TiO/Ag or a metal alloy.

Referring to FIG. 8, resistor parts 154 are formed in regions on the ceramic board 152 where no electrode part 153 is formed. In this case, the resistor part 154 is formed in the region where no electrode part 153 is formed, and the resistor part 154 is disposed to be in contact with the electrode part 153, such that the resistor part 154 may be electrically connected to the electrode part 153. In addition, in some instances, the resistor part 154 may be formed to partially overlap the electrode part 153. Since the resistor part 154 is electrically connected to the electrode part 153 as described above, the resistor part 154 generates resistive heat when electric power is applied to the electrode part 153.

In FIG. 8, the resistor part 154 is illustrated as being formed by surface coating in the region where no electrode part 153 is formed, but the resistor part 154 may be formed to have a predetermined pattern in the region where no electrode part 153 is formed. With this pattern, the heat generating member 150 may stably generate heat.

The resistor part 154 may be made of metal such as Ag, Pd, or Ru capable of exhibiting resistance or formed by patterning paste including various conductive fillers.

Likewise, the heat generating member 150 is installed in the camera module such that the electrode part 153 and the resistor part 154 are directed downward so that the electrode part 153 is connected to the wiring lines 161 and 162 illustrated in FIG. 2 or the wiring lines 261 and 262 illustrated in FIG. 4.

Referring to FIG. 9, after the electrode part 153 and the resistor part 154 are formed on the ceramic board 152, a radial coating layer 155 may be formed to cover the electrode part 153 and the resistor part 154. The radial coating layer 155 may be made of a high emissive substance having high heat emissivity, and the emissivity may be increased by the radial coating layer 155 to effectively remove moisture and frost in the camera module when electric power is applied to the electrode part 153 of the heat generating member 150 and the resistive heat is generated by the resistor part 154.

In this case, the radial coating layer 155 may cover the entire remaining region except for a partial region of the electrode part 153 connected to the wiring lines 161 and 162 illustrated in FIG. 2 or the wiring lines 261 and 262 illustrated in FIG. 4.

Si02, PbO, or the like may be used as a material of the radial coating layer 155, and other substances having high heat emissivity may be used. In addition, the radial coating layer 155 may serve as an insulating layer. For example, when electric power is applied to the heat generating member 150, an electric current flows through the heat generating member 150. A short-circuit may occur if the electric current in the heat generating member 150 deviates from the heat generating member 150 and flows through other electronic components in the camera module. Therefore, since the radial coating layer 155 is formed to cover the entire remaining region except for the partial region of the electrode part 153 connected to the wiring lines 161 and 162 illustrated in FIG. 2 or the wiring lines 261 and 262 illustrated in FIG. 4, it is possible to prevent the electric current flowing through the heat generating member 150 from flowing through other electronic components in the camera module.

Likewise, the heat generating member 150 is installed in the camera module such that the electrode part 153, the resistor part 154, and the radial coating layer 155 are directed downward so that the electrode part 153 is connected to the wiring lines 161 and 162 illustrated in FIG. 2 or the wiring lines 261 and 262 illustrated in FIG. 4.

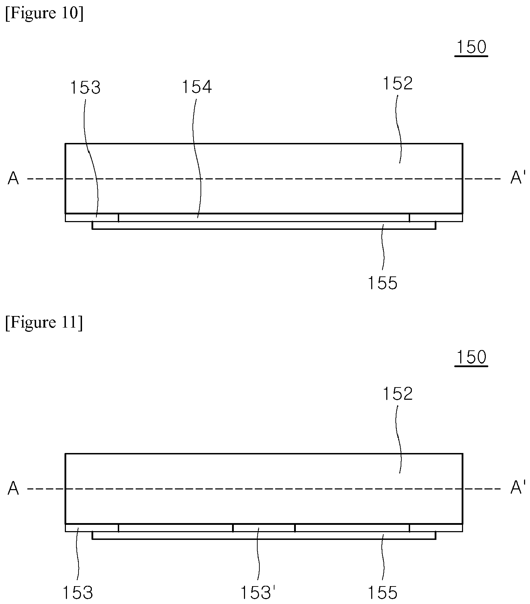

FIG. 10 is a cross-sectional view of the heat generating member taken along cutting line A-A' in FIG. 6.

Referring to FIG. 10, the electrode parts 153 are positioned, at predetermined intervals, on the lower portion of the ceramic board 152 in the state in which the heat generating member 150 is installed in the camera module, and the resistor part 154 is formed in the region where no electrode part 153 is formed. In this case, the resistor part 154 is in contact with and electrically connected to the electrode part 153. Then, an exposed surface of the resistor part 154 is coated with the radial coating layer 155, and the radial coating layer 155 may be formed to cover the entire remaining region except for the partial region of the electrode part 153 connected to the wiring lines 161 and 162 illustrated in FIG. 2 or the wiring lines 261 and 262 illustrated in FIG. 4.

FIG. 11 is a cross-sectional view of a heat generating member according to another exemplary embodiment of the present invention.

Referring to FIG. 11 the electrode part 153 and an auxiliary electrode part 153' are positioned, at predetermined intervals, on the lower portion of the ceramic board 152 in the state in which the heat generating member 150 is installed in the camera module, and the resistor part 154 is formed in the region where no electrode part 153 is formed. In this case, the resistor part 154 is in contact with and electrically connected to the electrode part 153. Then, an exposed surface of the resistor part 154 is coated with the radial coating layer 155, and the radial coating layer 155 may be formed to cover the entire remaining region except for the partial region of the electrode part 153 connected to the wiring lines 161 and 162 illustrated in FIG. 2 or the wiring lines 261 and 262 illustrated in FIG. 4.

Here, the auxiliary electrode part 153' is not connected to the wiring lines 161 and 162 illustrated in FIG. 2 or the wiring lines 261 and 262 illustrated in FIG. 4, but the auxiliary electrode part 153' may be disposed at a predetermined interval from the electrode part 153 to assist in flowing the electric current between the electrode part 153 and the resistor part 154.

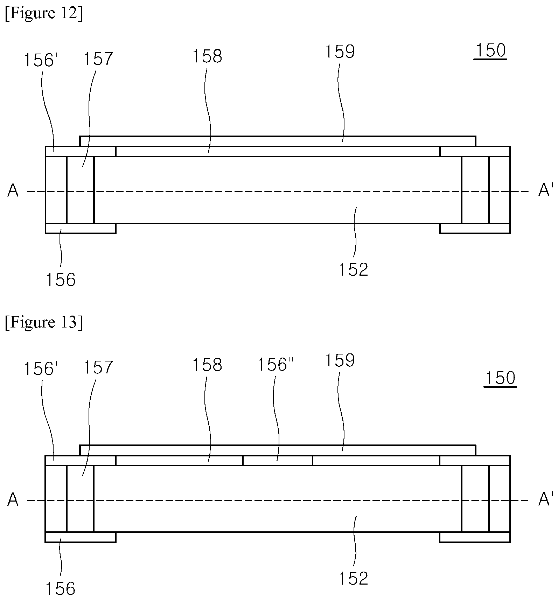

FIGS. 12 and 13 are cross-sectional views of a heat generating member according to yet another exemplary embodiment of the present invention.

Referring to FIGS. 12 and 13, in the state in which the heat generating member 150 is installed in the camera module, lower electrode parts 156 are positioned, at predetermined intervals, on the lower portion of the ceramic board 152, and upper electrode parts 156' are positioned on the upper portion of the ceramic board 152 so as to correspond to the lower electrode parts 156.

In this case, the upper electrode part 156' and the lower electrode part 156 are electrically connected to each other by a via electrode part 157 that penetrates the ceramic board 152. Here, the upper electrode part 156', the lower electrode part 156, and the via electrode part 157 may be made of, but not necessarily limited to, the same material.

Resistor parts 158 are formed, on the upper portion of the ceramic board 152, in the regions where no upper electrode part 156' is formed, and the resistor part 158 is in contact with and electrically connected to the upper electrode part 156'. Then, an exposed surface of the resistor part 158 is coated with a radial coating layer 159, and the radial coating layer 159 may be formed to cover the entire remaining region except for the partial region of the electrode part 153 connected to the wiring lines 161 and 162 illustrated in FIG. 2 and the wiring lines 261 and 262 illustrated in FIG. 4.

As described above, the electrode part connected to the wiring line and the electrode part electrically connected to the resistor part and configured to apply electric power for generating the resistive heat are separated from each other, and particularly, the resistor part 158 for generating the resistive heat is positioned on the upper portion of the ceramic board 152, such that it is possible to reduce the transfer of heat, which is emitted from the heat generating member 150, to the lower portion of the heat generating member 150.

Therefore, it is possible to prevent the board, the image sensor, or the like in the camera module from being damaged by the heat emitted from the heat generating member 150.

As illustrated in FIG. 13, an auxiliary electrode part 156" configured to assist in flowing the electric current between the upper electrode part 156' and the resistor part 158 may be disposed, on the upper portion of the ceramic board 152, at a predetermined interval from the upper electrode part 156'.

While the exemplary embodiments of the present invention have been described above, those skilled in the art may variously modify and change the present invention by adding, changing, deleting or modifying constituent elements without departing from the spirit of the present invention disclosed in the claims, and the modification and change also belong to the scope of the present invention.

## Claims

1. A camera module for a vehicle, comprising:
upper and lower housings(110, 120) having therein an accommodation space;
a lens holder(140) accommodated in an internal space of the upper housing and having a protruding first opening part;
a lens barrel(130) inserted into an upper portion of the first opening part;
a heat generating member(150) interposed between the lens holder and the lens barrel and having a second opening part having an inner diameter larger than an outer diameter of the first opening part; and
a lower board(170) accommodated in an internal space of the lower housing and mounted with an image sensor at a position corresponding to the lens barrel.

2. The camera module of claim 1, wherein the heat generating member(150) is coupled to an upper portion of the lens holder(140) so as to surround the outer diameter of the first opening part.

3. A camera module for a vehicle, comprising:
upper and lower housings(210, 220) having therein an accommodation space;
a lens barrel(230) coupled to a first opening part formed on an upper portion of the upper housing;
a heat generating member(150) interposed between the first opening part and the lens barrel and having a second opening part having an outer diameter smaller than an inner diameter of the first opening part; and
a lower board(270) accommodated in an internal space of the lower housing and mounted with an image sensor at a position corresponding to the lens barrel.

4. The camera module of claim 3, wherein the heat generating member(150) is coupled to a lower end of the lens barrel so as to surround an outer diameter of a lower end of the lens barrel, and the lens barrel penetrates the second opening part of the heat generating member and is inserted into the first opening part.

5. The camera module of claim 1 or 3, wherein the heat generating member comprises:
a ceramic board(152);
an electrode part(153) positioned on a lower portion of the ceramic board; and
a resistor part(154) positioned on the lower portion of the ceramic board and electrically connected to the electrode part, and wherein the heat generating member generates resistive heat by means of the resistor part when electric power is applied to the electrode part.

6. The camera module of claim 5, wherein the heat generating member further comprises a radial coating layer(155) with which an exposed surface of the resistor part is coated.

7. The camera module of claim 1 or 3, wherein the heat generating member comprises:
a ceramic board;
an upper electrode part and a lower electrode part positioned on an upper portion and a lower portion of the ceramic board, respectively;
a via electrode part configured to penetrate the ceramic board and electrically connect the upper electrode part and the lower electrode part; and
a resistor part positioned on the upper portion of the ceramic board and electrically connected to the upper electrode part, and wherein the heat generating member generates resistive heat by means of the resistor part when electric power is applied to the lower electrode part.

8. The camera module of claim 7, wherein the heat generating member further comprises a radial coating layer with which an exposed surface of the resistor part is coated.
